(19) Europäisches Patentamt
European Patent Office
Office européen des brevets

(11) **EP 2 132 014 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(21) Anmeldenummer: **08735028.6**

(22) Anmeldetag: **04.04.2008**

(51) Int Cl.:
*B29K 105/00* (2006.01)  *B32B 27/36* (2006.01)
*B29B 11/14* (2006.01)  *B29C 47/00* (2006.01)
*B29B 11/08* (2006.01)  *B29C 47/04* (2006.01)
*B29C 47/06* (2006.01)  *B29K 67/00* (2006.01)
*B29C 47/70* (2006.01)  *B29C 49/04* (2006.01)
*B29C 49/06* (2006.01)  *B29C 49/00* (2006.01)
*B29C 49/22* (2006.01)  *B29L 9/00* (2006.01)
*B29C 35/08* (2006.01)

(86) Internationale Anmeldenummer:
**PCT/EP2008/002699**

(87) Internationale Veröffentlichungsnummer:
**WO 2008/122414 (16.10.2008 Gazette 2008/42)**

(54) **VERFAHREN ZUR DIREKTEN UND KONTINUIERLICHEN HERSTELLUNG VON POLYESTER-FORMKÖRPERN MIT GERINGEM ACETALDEHYDGEHALT**

METHOD FOR THE DIRECT AND CONTINUOUS PRODUCTION OF POLYESTER MOLD BODIES WITH LOW ACETALDEHYDE CONTENT

PROCÉDÉ DE RÉALISATION DIRECTE ET CONTINUE DE CORPS MOULÉS EN POLYESTER AYANT UNE TENEUR FAIBLE EN ACÉTALDÉHYDE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.04.2007 DE 102007016586**

(43) Veröffentlichungstag der Anmeldung:
**16.12.2009 Patentblatt 2009/51**

(73) Patentinhaber: **Lurgi Zimmer GmbH
60295 Frankfurt am Main (DE)**

(72) Erfinder:
• **OTTO, Brigitta
14715 Milow (DE)**
• **DEISS, Stefan
55296 Harxheim (DE)**

(74) Vertreter: **Grünecker, Kinkeldey, Stockmair & Schwanhäusser
Leopoldstrasse 4
80802 München (DE)**

(56) Entgegenhaltungen:
**CH-A5- 694 291      DE-A1- 10 045 719
US-A- 4 746 477**

**Beschreibung**

Die vorliegende Erfindung betrifft ein kontinuierliches Verfahren zur direkten Herstellung von mindestens zweischichtigen Formkörpern aus einer hochkondensierten Polyesterschmelze.

**Stand der Technik**

Die bekannten aromatischen Polyester oder Copolyester, insbesondere Polyethylente-rephthalat und dessen Copolymere mit geringen Anteilen von beispielsweise Isophthal-säure oder Cyclohexandimethanol, Polybutylenterephthalat, Polytrimethylenterephthalat, Polyethylennaphthalat und deren Copolyestern, die als Ausgangsmaterial für die Herstellung von Hohlkörpern dienen, werden nach einer Schmelzepolykondensation bei einer bestimmten Intrinsischen Viskosität (I.V.), die z. B. bei Polyethylenterephthalat und seinen entsprechend niedrig modifizierten Copolyestern im Bereich zwischen 0,65-0,90 dl/g liegt, in Spritzgussmaschinen zu Hohlkörpern verarbeitet.

Das bisherige Standardverfahren für die Herstellung von PET zur Verwendung als Lebensmittelverpackung, insbesondere Flaschen, sieht wie folgt aus:

- Terephthalsäure bzw. deren Ester werden in einer Veresterungsstufe, die aus einem oder auch aus mehreren hintereinander geschalteten Reaktoren bestehen kann, mit Ethylenglykol verestert oder umgeestert.

- Diese Ester werden unter weiterer Temperaturerhöhung und Druckreduktion in der Schmelze zu einem PET mittlerer Viskosität mit IV = 0,55 - 0,65 dl/g poly-kondensiert und das Produkt gekühlt und granuliert.

- Die aus dem Endreaktor austretende Schmelze wird, wie vorstehend ausgeführt, granuliert und dieses PET-Granulat anschließend in einem Reaktor zur Festphasenpolykondensation (Solid State Polykondensation, SSP) unter Inertgas bei Temperaturen von 180 - 230°C auf eine mittlere Viskosität von 0,75 - 0,85 dl/g gebracht.

Die SSP wird hauptsächlich aus zwei Gründen angewendet: Um eine ausreichende mechanische Stabilität der fertigen Flasche zu erhalten, muss die Viskosität über das bei Polyester für textile Anwendungen übliche Niveau angehoben werden. Außerdem muss der Acetaldehydgehalt in der aus dem Endreaktor austretenden Polymerschmelze von ca. 30 - 70 ppm auf < 1 ppm nach Abschluss der Festphasenpolykondensation vermindert werden, um den Geschmack des Füllgutes in der fertigen PET-Flasche möglichst wenig zu beeinträchtigen. Das Granulat wird in der Regel als Endprodukt bezeichnet und verkauft. Verarbeiter dieses Granulates sind vor allem Hersteller von Hohlkörpern, die über Formgebungseinheiten verfügen. Dem Fachmann sind verschiedene Typen von Formgebungseinheiten bekannt, beispielsweise Spritzguss- und Blasformmaschinen. Häufig werden in nach dem Spritzgussverfahren arbeitenden Preformmaschinen Vorformlinge, so genannte Preforms, hergestellt, aus denen wiederum in einem weiteren Schritt bei einem weiteren Verarbeiter, in der Regel auch an einem anderen Standort, Polyesterflaschen in einem Blasformverfahren produziert werden. Auch andere Formgebungen für Polyestergranulat, beispielsweise in Maschinen zur Film- und Folienherstellung sind mit dem hier vorgestellten erfindungsgemäßen Verfahren möglich.

Acetaldehyd (AA) entsteht als übliches und unvermeidbares Nebenprodukt bei der PET-Herstellung. Vor allem aus geschmacklichen Gründen sollte der AA-Gehalt, der in das Füllgut migriert 20 $\mu$g/l nicht überschreiten. Aus diesem Grund muss in der fertigen Flasche der Acetaldehydgehalt von vornherein entsprechend niedrig gehalten werden. Der Anteil ist bis zu einem gewissen Grad durch die technologischen Bedingungen der Polykondensation und der anschließenden Festphasenpolykondensation steuerbar. In Abhängigkeit von der Vorbehandlung der Polymerschmelze ("thermische Vorgeschichte"), den Bedingungen in der Festphasenpolykondensation und dem Betreiben der Preformmaschine bildet sich während der Aufschmelzphase des Granulates erneut Acetaldehyd. In der fertigen Flasche zur Befüllung mit Süßgetränken sollte der AA-Wert 8 ppm, bei der Befüllung mit Wasser ohne Kohlensäure 4 ppm und bei der Befüllung mit Wasser mit Kohlensäure 2 ppm nicht überschreiten.

Da inzwischen auch die Nachfrage nach Polyesterflaschen stark gestiegen ist, haben die Anlagen zur Herstellung von Preforms nun Größen erreicht, die den Einsatz einer eigenen Polyestersyntheseanlage ausschließlich zur Versorgung der Preform-Herstellung ökonomisch sinnvoll erscheinen lassen. Dabei bestünde die Möglichkeit, die fertige Polyesterschmelze direkt in die Preformmaschinen zu leiten. Zum Abfangen saisonaler Schwankungen im Preformbereich ist es sinnvoll, gleichzeitig auch Granulat zu produzieren.

Deshalb hat es nicht an Versuchen gefehlt, in Analogie zur Faserherstellung direkt aus der Polykondensationsschmelze die sehr kostenaufwendigen und zeitraubenden Schritte in der SSP zu umgehen und den Acetaldehyd mit dem Zusatz von Additiven zu reduzieren.

So wird in der DE 195 03 053 ein Verfahren beschrieben, in dem die aus dem Polykondensationsreaktor austretende Schmelze in einer mit statischen Mischelementen versehenen Strecke mit einem Inertgas und einer AA-reduzierenden schwerflüchtigen Amidverbindung versetzt wird und unter Vakuumentgasung in kürzestmöglicher Zeit und unter geringstmöglicher Scherung der Schmelze einer Formgebungsvorrichtung zur Herstellung von Preforms zugeführt wird.

Die EP 0 842 210 nennt eine andere Mögliehkeit zur Umgehung der SSP. Dort wird die Schmelzepolykondensation bis zu einer Viskosität von 0,65-0,85 dl/g durchgeführt, der Polyester gekühlt und granuliert, wieder aufgeschmolzen und danach unter Bildung einer großen Oberfläche in einer geeigneten Vorrichtung durch-Spülen mit einem geeigneten Spülmittel von flüchtigen Substanzen wie AA befreit.

In der EP 0 842 211 wird ein Verfahren vorgeschlagen, in dem die Polykondensationsschmelze in einen entgasenden Extruder mit Polymerkompressionszone überführt wird, gleichzeitig ein geeignetes Spülmittel zu- und wieder abgeführt wird und die so behandelte Schmelze direkt in eine Formgebungsvorrichtung überführt wird.

Die US 6,099,778 offenbart ein Verfahren, in dem eine Polykondensationsschmelze direkt in eine Formgebungsvorrichtung überführt wird. Das Verfahren ist an die Bedingungen geknüpft, dass der Katalysator für die Polykondensation frei von Kobalt ist, eine acetaldehydreduzierende Verbindung zugesetzt und die Schmelze vor der Zufuhr in die Formgebungsvorrichtung bei einem Druck oberhalb von 25 mm Hg bis zu fast Normal-druck entgast wird, wobei die Entgasungsvorrichtung z.B. aus einem Entgasungsextruder oder anderen geeigneten konventionellen Apparaturen bestehen kann. Als AAreduzierende Substanzen werden hauptsächlich Polyamide, Polyesteramide und Polye-thylenisophthalat genannt.

Die WO 98/41381 beschreibt eine Apparatur und ein kontinuierliches Verfahren zur Herstellung von geformten Polyesterartikeln mit niedrigem AA-Gehalt aus der Polykondensationsschmelze ohne zwischenzeitliches Erstarren des Polyesters. Dabei wird die Polykondensationsschmelze in einem Extruder unter Druck mit einem Inertgas vermischt, die Schmelze unter Vakuum entgast und in einer Mischzone mit einer AA-reduzierenden Verbindung umgesetzt, um danach sofort in die Spritzgusseinheit geführt zu werden. Als AA-reduzierende Verbindungen werden im Prinzip die in der vorher angeführten US-Anmeldung genannten Verbindungen aufgeführt.

In der EP 0 968 243 wird ein ähnlicher Prozess beschrieben. Die Polykondensationsschmelze wird dort in eine Mischvorrichtung geführt, die aus einem Statikmischer, einer Zahnradpumpe oder einem Extruder bestehen kann. In ihr werden ein Abstreifmittel wie Stickstoff oder Kohlendioxid und AA-Reduktionsmittel wie Polyamide oder Polyesteramide eingespeist. Die Schmelze wird aus dieser Mischvorrichtung über eine oder mehrere Düsen in einen Schnellverdampfer überführt. Dort wird sie unter einem Vakuum von 5 - 50 mm Hg entgast und in eine Formgebungsvorrichtung eingespeist, wobei nochmals AA-Reduktionsmittel zugegeben werden können.

In einem Vortrag am 25./26.02.2003 hat Inventa-Fischer einen weiteren Prozess zur Herstellung von Preforms direkt aus der Polykondensationsschmelze vorgestellt. Demzufolge wird ein Hochviskositätsreaktor in eine Linie eingebaut, die PET-Prepolymer liefert, und die Viskosität auf 0,85 dl/g angehoben. Danach werden AA-Reduktionsmittel und ggf. andere Additive in die Schmelze eingespeist und die Mischung über einen Mischer in die Spritzgussmaschine überführt.

In der DE 100 45 719 wird ein Verfahren vorgeschlagen, bei dem nach dem Endreaktor ein Teil der Polykondensationsschmelze abgezweigt und diesem Teilstrom in einem Doppelschneckenextruder AA-Reduktionsmittel wie Amide aus Polycarbonsäuren und mehrwertigen Aminen sowie Polyesterstabilisatoren wie z. B. Triethylphosphat zugegeben werden. Im gleichen Extruder werden gasförmige Reaktionsprodukte durch einen Entgasungsstutzen entfernt. Der Teilstrom wird anschließend wieder mit dem Hauptstrom vereinigt. Dieses Verfahren hat den Vorteil, dass der aufwendige Entgasungsextruder nur für einen Teilstrom der Polykondensationsschmelze ausgelegt werden muss und entsprechend billiger ist. Die grundsätzliche Notwendigkeit einer Entgasung bleibt jedoch bestehen.

Als weitere mögliche AA-Reduktionsmittel, bei deren Verwendung die SSP nicht mehr notwendig ist, werden in US 6,274,212 Verbindungen vorgeschlagen, die mindestens zwei Wasserstoff-substituierte, an Kohlenstoff gebundene Heteroatome aufweisen und bei der Reaktion mit AA im Polyester organische Verbindungen bilden, die mindestens zwei Heteroatome in einem unverbrückten 5- oder 6-gliedrigen Ring enthalten. Als eine mögliche Verbindung dieser Gruppe ist Anthranilamid genannt. Diese Additive können als Suspension z. B. auf Polyester-Granulat aufgesprüht, in Form von Masterbatch-Granulat dem Polyester-Granulat oder nach dem Aufschmelzen des Granulats der Schmelze zugemischt werden.

Die beschriebenen Verfahren haben somit den Nachteil, dass der Einsatz von teurem Trägergas für eine Schmelzeentgasung und eine zusätzliche Entgasungseinheit erforderlich ist, somit ein großer und damit teurer apparativer Aufwand betrieben werden muss und letztendlich in Abhängigkeit vom Zeitpunkt des Acetaldehyd-Scavengerzusatzes eine erneute AA-Bildung nicht in jedem Fall verhindert wird.

Ein weiteres Verfahren zur Herstellung von Preforms für Getränkeflaschen ist die direkte Herstellung von Preforms aus der hochviskosen PET-Schmelze. Die Beschreibung dieser Direktverfahren ist in den Patenten DE 195 03 053, DE 195 05 680 oder WO 2005/061581 erfolgt. Zur Reduzierung des störenden Prozess- Acetaldehydgehaltes wird dem Hauptschmelzestrom vor dem Eintritt in die Formgebungseinheiten eine AAreduzierend wirkendes Additiv zudosiert.

Das Additiv wird mit Hilfe von statischen Mischaggregaten, die in der Rohrleitung installiert sind, in der Polymerschmelze homogen verteilt und anschließend dort die Reaktion mit den Vinylesterendgruppen des Polyesters und/oder mit dem vorhandenen Acetaldehyd eingeleitet. Die beschrieben acetaldehydreduzierenden Verfahren führen zur starken Reduzierung dieses Stoffes, aber auch zu Verfärbungen, denen mit Farbstoffzusatz entgegengewirkt werden muss. Das bei der Reaktion der polyamidischen Additive während der Reaktion mit Vinylesterendgruppen entstehende Wasser als Nebenprodukt führt zu einem unerwünschten IV-Abbau. Des Weiteren sind diese Additive sehr teuer und erhöhen damit erheblich die Produktionskosten.

Die CH 694291 A5 offenbart ein Verfahren zum Direktverformen einer PET-Schmelze zu Mehrschichtfolien. Dabei wird die Schmelze direkt aus der Polykondensation entnommen und im Hauptstrom für die Basisschicht unverändert, für die Deckschichten im Seitenstrom mit Zusätzen vermischt, der Foliendüse zur Folienherstellung zugeführt. Auch diese Entgegenhaltung offenbart also, dass für die Schichten, die potenziell mit Nahrungsmitteln oder Getränken in Kontakt kommen, Zusätze notwendig sind, wobei im Hinblick auf einen möglichen Acetaldehydgehalt die üblichen und bereits oben diskutierten Scavenger-Verbindungen zum Einsatz kommen.

Dem Stand der Technik ist somit gemeinsam, dass für Verpackungsmaterialien, zum Einsatz bei der Verpackung von Nahrungsmitteln sowie Getränken, entweder aufwendige Nachbearbeitungsschritte notwendig sind (Entgasung, Festphasennachkondensation usw.) oder aber Kostenintensive Scavenger eingesetzt werden müssen.

## Aufgabe der vorliegenden Erfindung

Es wäre wünschenswert, ein Verfahren zur Herstellung von Formkörpern aus Polyestern anzugeben, geeignet zur Herstellung von Materialien für die Verpackung von Nahrungsmitteln und Getränken, bei dem zumindest teilweise auf die aufwendigen Nachbearbeitungsschritte oder kostenintensiven Zusätze verzichtet werden könnte.

## Kurze Beschreibung der vorliegenden Erfindung

Diese Aufgabe wird durch das Verfahren gemäß Anspruch 1 gelöst. Bevorzugte Ausführungsformen finden sich in den Unteransprüchen 2 bis 10 sowie der folgenden Beschreibung.

## Kurze Beschreibung der Figuren

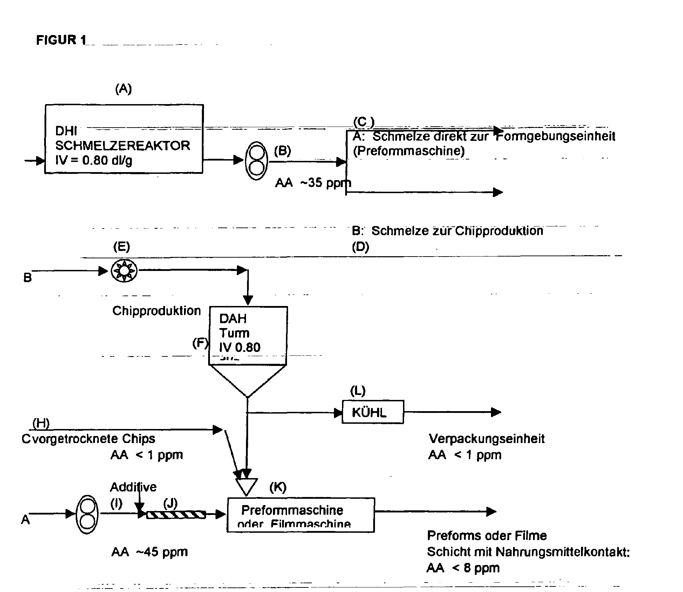

Figur 1 zeigt schematisch eine mögliche Verfahrensführung in Übereinstimmung mit der vorliegenden Erfindung.

Figur 2 zeigt schematisch den Aufbau eines mehrlagigen Materials, erhalten durch das Verfahren der vorliegenden Erfindung.

## Detaillierte Beschreibung der Erfindung

Überraschenderweise wurde gefunden, dass die oben genannte Aufgabe durch ein Verfahren zur Herstellung von mehrlagigen Formkörpern und Verpackungsfilmen gelöst werden kann, wobei eine Basisschicht aus einem Direktverfahren zugeführten kontinuierlich fließenden Schmelzestrom mit hoher IV und Prozessaldehydgehalt hergestellt wird, und mindestens eine weitere Schicht erhalten wird durch den Einsatz einer hochkondensierten Polyesterschmelze mit hoher IV und niedrigem Acetaldehydgehalt. Das erfindungsgemäße Verfahren ist geeignet zur Herstellung von mehrlagigen Formkörpern oder Verpackungsfilmen aus hochviskosen Polymeren, umfassend aromatische Polyester oder Copolyester, erhältlich aus einer oder mehreren Dicarbonsäuren bzw. deren Derivaten, wie Estern, insbesondere Methylestern, wie Terephthalsäure, Isophthalsäure, Naphthalendicarbonsäure und/oder 4,4-Bisphenyldicarbonsäure und einem oder mehreren Diolen, wie Ethylenglykol, Propylenglykol, 1,4-Butandiol, 1,4-Cyclohexandimethanol, Neopentylglykol und/oder Diethylenglykol.

Das erfindungsgemäße Verfahren zeichnet sich dadurch aus, dass die aus einem konventionellen Schmelzereaktor (A) austretende Polyesterschmelze, die typischerweise eine Grenzviskosität (IV) von etwa 0,60 bis 0,85 dl/g sowie einen Acetaldehydgehalt von 20 bis 60 ppm aufweist, in zwei Teilströme (C) sowie (D) aufgeteilt wird. Die Austragung aus dem Schmelzereaktor erfolgt dabei typischerweise mittels einer Austragspumpe (B).

Die vorliegende Erfindung betrifft dabei insbesondere die Herstellung von zwei- oder mehrlagigen Formkörpern, insbesondere Preforms für die Kunststoffflaschenherstellung (d.h. die Rohlinge, aus denen dann in einem weiteren Verarbeitungsschritt die Flaschen geformt werden). Bevorzugt ist es in diesem Zusammenhang, aber auch für alle weiteren Ausführungsformen der vorliegenden Erfindung, wenn die Grenzviskosität höher als etwa 0,65 dl/g ist bevorzugt höher als etwa 0,68 dl/g, und insbesondere 0,75 dl/g oder mehr, wie 0,75 dl/g bis 0,90 dl/g, insbesondere 0,80 dl/g bis 0,86 dl/g. Die hier erwähnten Preforms werden bevorzugt mit einer Verarbeitungseinrichtung mit einer Preformmaschiene hergestellt, so dass im erfindungsgemäßen Verfahren bevorzugt keine Foliendüse zum Einsatz kommt.

Ein geeigneter Schmelzereaktor (A) ist beispielsweise ein Polykondensationsreaktor für die Herstellung von hohen Grenzviskositäten, wie er in EP 0320586 A2 beschrieben ist. Geeignet ist insbesondere auch ein sogenannter Double-Drive-Reaktor (Hersteller: Zimmer AG), der beispielsweise in US 3,617,225 beschrieben ist.

Nach der Austragung der Polyesterschmelze aus dem Schmelzereaktor, typischerweise mittels einer Auftragspumpe (B) wird die Polyesterschmelze durch geeignete Maßnahmen in zwei Teilströme aufgeteilt. Geeignete Vorrichtungen hierzu sind dem Fachmann bekannt. Der Teilstrom (C) führt die erhaltene Polyesterschmelze direkt in die Formgebungseinheit, ohne dass diesem Teilstrom Acetaldehyd-Scavenger zugesetzt werden, und ohne dass eine Entgasung oder Festphasenkondensation stattfindet. Dieser Teilstrom kann lediglich noch optional mit anderen Additiven in einer Additivzugabeeinheit (I) versehen werden, beispielsweise UV-Absorber, Farbstoffe, usw., wobei anschließend eine Homogenisierung in einer Mischstrecke (J) erfolgen kann, beispielsweise eine Mischstrecke mit statischen Mischelementen. Anschließend wird dieser Teilstrom direkt der Formgebungseinheit (K) zugeführt, in welcher die Polyesterschmelze des Teilstroms (C) die so genannte Basisschicht ergibt

Der Teilstrom (D), erhalten nach dem Schmelzereaktor (A) wird über eine Granulierungseinrichtung (E) einer Dealdehydisierungseinrichtung, beispielsweise einem entsprechenden Turm (F) zugeführt. Dadurch werden Chips (im folgenden auch Granulat) aus Polyester erhalten, wobei die ursprüngliche Grenzviskosität, erhalten nach dem Schmelzereaktor (A) im Wesentlichen beibehalten wird, der Aldehydgehalt jedoch auf Werte von vorzugsweise weniger als 5 ppm abgesenkt wird, stärker bevorzugt weniger als 3 ppm, insbesondere weniger als 1 ppm. Die aus der Dealdehydisierungseinheit austretenden Chips werden anschließend, nach erneutem Aufschmelzen, der Formgebungseinheit (K) zugeführt, so dass aus dem entaldehydisierten Polyestermaterial die mindestens eine Deckschicht mit sehr geringem Acetaldehydgehalt erhalten wird. Prozesstechnisch wird dabei ein leichter Anstieg des Acetaldehydgehalts in der Deckschicht nicht zu vermeiden sein (aufgrund der thermischen Belastung usw.), so dass im erfindungsgemäß erhaltenen mindestens zweischichtigen Formkörper die vorstehend bezeichnete Deckschicht einen Acetaldehydgehalt aufweisen wird, der größer ist, als der Acetaldehydgehalt des Ausgangsmaterials für die Deckschicht, wobei jedoch immer noch ein Acetaldehydgehalt von weniger als 8 ppm gesichert ist, vorzugsweise weniger als 5 ppm.

Erfindungsgemäß wird dabei der Teilstrom (D) lediglich einer Dealdehydisierung unterworfen, beispielsweise in einem entsprechenden Turm (F). Diesem Teilstrom (D) wird aber kein Additiv zugesetzt, das als Aldehyd-Scavenger dient, wie beispielsweise in der eingangs diskutierten Patentanmeldung CH 694291 A5 angegeben. In diesem Zusammenhang stellt die vorliegende Erfindung ein einfaches Verfahren zur Herstellung einer mindestens zweilagigen Struktur zur Verfügung. Dabei entsteht mindestens eine Deckschicht mit einem geringen Acetaldehydgehalt, ohne dass kostenträchtige und gegebenenfalls sich nachteilig auswirkende Aldehyd-Scavenger zum Einsatz kommen müssen. Diese Deckschicht eignet sich daher insbesondere auch zur Verwendung in Bereichen, wo die Deckschicht direkt mit verpackten Lebensmitteln und/oder Getränken in Berührung kommt, da hierfür geringe Acetaldehydgehalte notwendig sind. Es ist in diesem Zusammenhang auch nicht nachteilig, dass die Basisschicht, erhalten aus dem Teilstrom (C) einen höheren Acetaldehydgehalt aufweist, d. h. üblicherweise den Prozessgehalt an Acetaldehyd. Es hat sich gezeigt, dass entgegen üblicher Auffassung, keine Acetaldehyd-Scavenger in der Deckschicht notwendig sind, um gegebenenfalls migrierendes oder diffundierendes Acetaldehyd aus der Basisschicht abzufangen. Erfindungsgemäß hat sich gezeigt, dass bei in Übereinstimmung mit dem Verfahren der vorliegenden Erfindung hergestellten mindestens zweilagigen Strukturen kein unerwünschter Anstieg des Acetaldehydgehaltes in der Deckschicht auftritt, selbst bei längerer Lagerung oder Langzeitanwendung. Erfindungsgemäß kann somit auf den Einsatz von teuren und gegebenenfalls sich nachteilig auf das Produkt auswirkenden Acetaldehyd-Scavengern in der Deckschicht verzichtet werden.

Das erfindungsgemäße Verfahren kann so ausgestaltet werden, dass eine eventuelle Überschussproduktion an Chips durch eine geeignete Kühleinheit (L) ausgeschleust werden kann, so dass diese Überschussproduktion anschließend verpackt und entweder zur Verwendung in der Anlage gelagert oder verkauft werden kann. Das erfindungsgemäße Verfahren erlaubt auch die Einführung von vorgetrockneten Chips aus Polyestem, mit einem Acetaldehydgehalt wie vorstehend beschrieben, über eine Zugabelinie (H), um eventuelle Produktionsschwankungen auszugleichen.

Erfindungsgemäß werden somit in einem direkten und kontinuierlichen Verfahren mehrschichtige Polyesterformkörper erhalten, die zur Verpackung von Nahrungsmitteln und Getränken geeignet sind, wobei die mit den Nahrungsmitteln oder Getränken in Kontakt kommenden Deckschichten einen sehr geringen Acetaldehydgehalt aufweisen, ohne dass kostenintensive Scavenger eingesetzt werden müssen, bzw. zeitaufwendige und kostenintensive Entgasungsbehandlungen oder Festphasenkondensation durchzuführen sind.

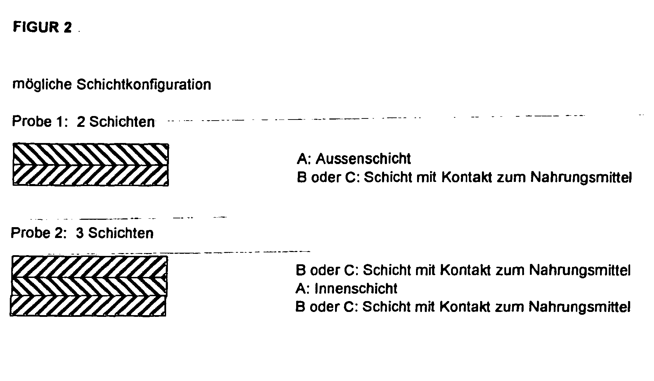

Erfindungsgemäß können somit Verpackungsfilme oder auch Preforms für Getränkebehälter erhalten werden, wobei sichergestellt ist, dass die mit den Nahrungsmitteln bzw. Getränken in Kontakt kommende Oberflächen einen ausreichend niedrigen Acetaldehydgehalt aufweisen. Geeignete Schichtkonfigurationen sind in der Figur 2 angegeben. Ein zweischichtiger Formkörper, beispielsweise eine Verpackungsfolie, kann eine Außenschicht (A) aufweisen, erhalten aus dem Teilstrom (C), sowie eine Deckschicht (B), erhalten aus dem Teilstrom (D). Ein geeigneter dreischichtiger Aufbau umfasst eine Innenschicht oder Basisschicht, erhalten aus dem Teilstrom (C), sowie zwei Deckschichten, erhalten aus dem Teilstrom (D).

Erfindungsgemäß kann somit kontinuierlich ein mehrlagiger Formkörper hergestellt werden, wobei das Verfahren sowohl die Polykondensation als auch die Formgebung umfasst. Durch den Einsatz des Teilstroms (C), der keine Entaldehydrisierung unterworfen wird und auch nicht mit Acetaldehyd-Scavenger versetzt wird, ist es möglich, eine die im wesentlichen mechanischen Eigenschaften des Formkörpers bestimmende Basisschicht zu erzeugen, die den wesentlichen Gewichtsanteil der mehrschichtigen Formkörper in Übereinstimmung mit der vorliegenden Erfindung ausmacht. Lediglich die mindestens eine Deckschicht wird aus dem Teilstrom (D) erzeugt, die einer Entaldehydrisierung unterworfen wurde. Dadurch wird sichergestellt, dass der Teil des Formkörpers, der beispielsweise in Kontakt mit Lebensmitteln und/oder Getränken gedacht ist, einen ausreichend niedrigen Acetaldehydgehalt aufweist. Gleichzeitig macht diese mindestens eine Deckschicht lediglich einen geringen Teil des Gesamtgewichts des Formkörpers aus, so dass sich hierdurch deutliche Kostenersparnisse ergeben, da lediglich ein geringer Anteil des Gewichts des Gesamtformkörpers der aufwendigen Entaldehydrisierung unterworfen wird. Auf den Einsatz von Acetaldehyd-Scavengern kann in Übereinstimmung mit der vorliegenden Erfindung aber dennoch verzichtet werden, so dass sich hierdurch ebenfalls ein weiterer Kostenvorteil ergibt. Gleichzeitig wird dadurch vermieden, dass eventuelle Restgehalte an Acetaldehyd-Scavengern aus einer Deckschicht in das Lebensmittel migrieren, so dass die erfindungsgemäß hergestellten mehrschichtigen Formkörper auch diesen potentiellen Nachteil vermeiden. Erfindungsgemäß können alle möglichen Polyestermaterialien zum Einsatz kommen. Weiterhin ist es möglich, den erfindungsgemäßen Formkörper zweischichtig, dreischichtig oder auch mehrschichtig auszuführen. Wesentlich ist lediglich die mindestens zweischichtige Ausführung, wie in Anspruch 1 beschrieben. Zusätzliche Schichten können gleichzeitig mit der Formgebung im erfindungsgemäßen Verfahren erfolgen oder können nachträglich aufgebracht werden. Beispiele sind Athessivschichten zur nachträglichen Aufbringung von Etiketten usw. oder andere übliche Schichten, die dem Fachmann bekannt sind.

Die erfindungsgemäß einzusetzenden Apparate, wie Schmelzreaktor, Entaldehydrisierung-Turm, Mischstrecken, Formgebungseinrichtungen usw. sind dem Fachmann im Prinzip bekannt.

**Beispiele**

Die Erfindung wird nunmehr anhand einiger, in keiner Weise einschränkender Ausführungsbeispiele näher beschrieben. Die angegebenen Eigenschaftswerte wurden hierbei wie folgt ermittelt:

Zur Beschreibung der Produkteigenschaften wurden die nachfolgend beschriebenen Analysenmethoden eingesetzt.

Die Intrinsic-Viskosität (I.V.) wurde bei 25 °C an einer Lösung von 500 mg Polyester in 100 ml eines Gemisches aus Phenol und 1,2-Dichlorbenzol (3:2 Gew.-Teile) gemessen.

Die Messung der Farbwerte L und b erfolgte nach HUNTER. Die Polyesterchips wurden zunächst im Trockenschrank bei 135 ± 5 °C während einer Stunde kristallisiert. Die Farbwerte wurden danach ermittelt, indem in einem Dreibereichfarbmeßgerät der Farbton der Polyesterprobe mit drei Fotozellen, denen je ein Rot-, Grün- und Blaufilter vorgeschaltet war, gemessen wurde (X-, Y- und Z-Werte): Die Auswertung erfolgte nach der Formel von HUNTER, wobei

$$L = 10\sqrt{Y}$$

und

$$b = \frac{7,0}{\sqrt{Y}\,(Y - 0,8467\,Z)}$$

ist.

Der Acetaldehyd wurde durch Erhitzen in einem geschlossenen Gefäß aus Polyester ausgetrieben und der Acetaldehyd im Gasraum des Gefäßes gaschromatographisch mit dem Head space-Injektionssystem H540, Perkin Elmer; Trägergas: Stickstoff; Säule: 1,5 m Edelstahl, Füllung: Poropack Q, 80 - 100 mesh; Probemenge: 2g; Heiztemperatur: 150 °C. Heizdauer: 90 min. bestimmt.

Zur Bestimmung des Kristallisationsgrades KTG wird dreimal die Dichte p von 30 Chips in einem Dichtegradienten mit einem Tetrachlorethan/Heptan-Gemisch bei 23 °C ermittelt und berechnet nach

$$KTG = \frac{Pc\,(P - Pa)}{P\,(Pc - Pa)}$$

Wobei die Dichte von 100% kristallinem PET: Pc = 1,455 und die Dichte von amorphem PET Pa = 1,332 ist.

Die Ermittlung der Schmelzenthalpie (Heat of Fusion; HOF) erfolgt in der Weise, dass die PET - Einwaage in 50 K - Schritten bis auf 200 °C erwärmt, 5 min. gehalten und anschließend mit 10 K / min. bis auf 300 °C erhitzt wird und die verbrauchte Energie in kJ/kg zu bestimmen ist.

Zur Bestimmung der Acetaldehyd-Migration wurde die fertige 0,5l PET-Flasche mit Mineralwasser mit $CO_2$ gefüllt und 10 Tage bei 40°C im Thermostaten gelagert. Anschließend wurde im Füllgut Wasser der migrierte Acetaldehydgehalt mittels HPLC gemessen und in $\mu$g/l angegeben.

Das Polyethylenterephthalat-Polymer für die Beispiele wurde gemäß dem bekannten Stand der Technik hergestellt und wies folgende Zusammensetzung auf:

Katalysatorgehalt Sb: 220 ppm, Phosphorgehalt: 20 ppm, Cobalt: 20 ppm, Blauer Farbstoff: 0,5 ppm; IPA: 2,0 Ma-%, DEG: 1,4 Ma-%.

Qualität des eingesetzten PET-Materials zur Herstellung von mehrlagigen Preforms (Tabelle 1)

Tabelle 1

|  | Dim. | STD-Granulat | Granulat D | Schmelze C |
| --- | --- | --- | --- | --- |
| IV | dl/g | 0,806 | 0,804 | 0,794 |
| AA | ppm | 0,6 | 0,9 | 26 |
| Farbe b (Mahlgut) | E | 1,1 | 0,9 | 0,8 |
| KTG | % | 59,7 | 43,2 | - |
| HOF | kJ/kg | 58,3 | 34,5 | - |

Die Schmelze der Linie C wurde der Formgebungseinheit in Kanal a unter gleichbleibender Temperatur von 270°C direkt ohne weiteren Zusatz von Additiven direkt zugeführt.

Die Schmelze der Linie D wurde zu annähernd runden Chips mit einem Unterwassergranulator (E) verarbeitet und sehr schnell mittels angeschlossener Zentrifuge vom Wasser getrennt. Mit den noch heißen, bereits teilkristallisierten Chips (KTG 3%) wurde der Dealdehydisierungsturm (F) direkt über eine Zellenradschleuse beschickt. Die Temperatur im DAH-Tower lag bei 272°C, der Taupunkt bei - 22°C, das Luft/Chipverhältnis wurde mit 0,3 zu 1 gewählt. Die heiße Luft wurde im Gegenstrom gefahren. Nach 9,5 Stunden Dealdehydisierungszeit wurde das fertige Granulat direkt dem Extruderteil der Formgebungsmaschine zugeführt , bei Temperaturen von 270°C wieder aufgeschmolzen und in Kanal b verbracht. In der Formgebungseinheit wurden dann die beiden Produktströme zu mehrlagigen Preforms verarbeitet. Für diese Tests wurde eine modifizierte Multilayer- Laborpreformmaschine ingesetzt. In dieser Preformmaschine wurden auch die Monolayer Preforms hergestellt.

Die 28g 3-layer-Preforms wurden in einem 2 Kavitätenwerkzeug hergestellt.

Die so hergestellten Preforms wurden anschließend in einer 0,5l Form mit einem Petaloidboden an einer Pilotflaschenblasmaschine von der Fa. Sidel SBO1 zu Flaschen geblasen. Der Blasprozess wurde dabei nicht verändert. Die Preforms wurden mittels IR-Licht auf 106 °C erwärmt und bei einem Druck von 35 bar verarbeitet.

Vergleichsbeispiel 1

Das Standard-Flaschen-Granulat vom europäischen Markt mit einer IV von 0,80 dl/g wurde vor der Verarbeitung in der Preformmaschine 5 Stunden in einem Somos Trockenlufttrockner über 5 Stunden bei 160 °C auf Wasserwerte < 30 ppm (Karl Fischer Methode) getrocknet und dann in der Preformmaschine verarbeitet.

Vergleichsbeispiel 2

Das Flaschengranulat D, hergestellt nach dem DHI - Verfahren wurde direkt zum Extruderteil der Preformmaschine gefördert und noch heiß (ca. 170°C) ohne vorherige Trocknung zu Monolayer-Preforms verarbeitet.

Vergleichsbeispiel 3

Die Schmelze C aus dem DHI-Verfahren wurde direkt ohne Abkühlung (Schmelzetemperatur ca. 270°C) in die Preformmaschine geleitet und zu Monolayer-Preforms verspritzt. Der Extruderteil der Preformmaschine diente hier lediglich dem Transport und der Vermischung der Schmelze.

Beispiel 1

Die noch heißen DHI-Chips D-(siehe Vergleichsbeispiel 2) wurden in der Preformmaschine aufgeschmolzen und leicht versetzt mit der Schmelze C (35%) und mit der Schmelze der aufgeschmolzenen Chips D in der Preformmaschine zu Multilayerpreforms verarbeitet. Die Schichtdicke der Innenschicht (Basisschicht D) betrug 0,6 mm (10%).

Beispiel 2

Verarbeitung wie in Beispiel 1, lediglich die Schichtdicke der Innenschicht (Basisschicht) wurde auf 2,5 mm (25%) erhöht.

Beispiel 3

Heiße DHI-Chips D (siehe Vergleichsbeispiel 2) wurden in einer 2-Layerpreformmaschiene von Netstal mit 6 Kavitäten aufgeschmolzen und leicht versetzt mit der Schmelze C in der Preformmaschiene zu zweischichtigen Preforms verarbeitet. Die Schichtdicke der Innenschicht betrug 2,5 mm.

Die wichtigsten Qualitätsparameter werden in der nachfolgenden Tabelle 2 dargestellt.

Tabelle 2

| | Layer | Farbe L/b (Mahlgut) | AA ppm (Mahlgut) | AA Migration in Wasser [$\mu$g/l] |
|---|---|---|---|---|
| Vergleichsbeispiel 1 | Monolayer | 92/1,5 | 6,9 | 67 |
| Vergleichsbeispiel 2 | Monolayer | 92/0,2 | 6,8 | 64 |
| Vergleichsbeispiel 3 | Monolayer | 91/0,1 | 37 | 380 |
| Beispiel 1 | 3 Layer / D(0,6)-C-D | 91/0,1 | 22 | 93 |
| Beispiel 2 | 3 Layer / D(2,5)-C-D | 91/0,1 | 19 | 64 |
| Beispiel 3 | 2 Layer/ D(2,5)-C | 91/0,1 | 8 | 65 |

Die Ergebnisse der physikalischen Anforderungen an CSD - Flaschen entsprechen den marktüblichen Standardwerten. Insbesondere konnten keine signifikant erhöhten Acetaldehydmigrationstendenzen festgestellt werden.

**Patentansprüche**

1.  Verfahren zur Herstellung von mindestens zweischichtigen Formkörpern aus einer hochkondensierten Polyesterschmelze, **dadurch gekennzeichnet, dass** die aus einem Schmelzereaktor austretende Polyesterschmelze in zwei Teilströme (C) und (D) aufgeteilt wird, wobei die Polyesterschmelze des Teilstroms (C) ohne Zusatz von Acetaldehyd-Scavengern und ohne Durchführung einer Entaldehydisierung oder Festphasenkondensation dem Formgebungswerkzeug (K) zugeführt wird, und wobei der Teilstrom (D) einer Entaldelydisierung unterworfen wird, ohne Zusatz von Aldehyd-Scavengern, so dass ein Acetaldehydgehalt von weniger als 5 ppm realisiert wird, vor der Einführung in die Formgebungseinrichtung (K), und wobei durch die Formgebungseinrichtung (K) aus dem Teilstrom (C) eine Basisschicht geformt wird und wobei durch die Formgebungseinheit (K) aus dem Teilstrom (D) mindestens eine Deckschicht geformt wird.

2.  Verfahren nach Anspruch 1, wobei der mehrschichtige Formkörper mindestens dreischichtig ist.

3.  Verfahren nach einem der vorstehenden Ansprüche, wobei der Formkörper ein Verpackungsfilm ist.

**4.** Verfahren nach einem der Ansprüche 1 oder 2, wobei der Formkörper ein Preform für die Flaschenherstellung ist.

**5.** Verfahren nach einem der vorstehenden Ansprüche, wobei die Polyesterschmelze des Teilstroms (C) mit Additiven versetzt wird, vor der Einführung des Teilstroms (C) in die Formgebungseinheit (K).

**6.** Verfahren nach einem der vorstehenden Ansprüche, wobei die Schmelzeleitungen für einen Betriebsdruck von bis zu 200 bar und einer Betriebstemperatur von bis zu 320 °C ausgelegt sind.

**7.** Verfahren nach einem der vorstehenden Ansprüche, wobei zusätzlich ein Teil, bevorzugt mindestens 25 %, aber maximal 95 % der entaldehydisierten Polymerschmelze des Teilstroms (D) über einen Kühler (L) einer Verpackungseinheit zugeführt wird.

**8.** Verfahren nach einem der vorstehenden Ansprüche, wobei mindestens 50 % aber maximal 95 % des aus dem Schmelzereaktor (A) austretenden Polyestermaterials dem Teilstrom (D) zugeführt wird.

**9.** Verfahren nach einem der vorstehenden Ansprüche, wobei die durch den Teilstrom (D) konstituierten Schichten einen Acetaldehydgehalt von weniger als 8 ppm aufweisen.

**10.** Verfahren nach einem der vorstehenden Ansprüche, wobei die durch den Teilstrom (C) konstituierte Schicht des mehrschichtigen Formkörpers mehr als 70 Gew.-% des Formkörpers ausmacht.

**Claims**

**1.** Method for the manufacture of at least two-layer moulded bodies from a highly condensed polyester melt, **characterised in that** the polyester melt exiting a melt reactor is divided into two partial flows (C) and (D), wherein the polyester melt of the partial flow (C) is fed to the moulding tool (K) without the addition of acetaldehyde scavengers and without performance of dealdehydisation or solid state condensation and wherein the partial flow (D) is subjected to dealdehydisation, without the addition of aldehyde scavengers, so that an acetaldehyde content of less than 5 ppm is realised before the introduction into the moulding device (K) and wherein the moulding device (K) forms a basis layer from the partial flow (C) and wherein the moulding unit (K) forms at least one covering layer from the partial flow (D).

**2.** Method according to Claim 1, wherein the multi-layer moulded body has at least three layers.

**3.** Method according to one of the preceding claims, wherein the moulded body is a packaging film.

**4.** Method according to one of the Claims 1 or 2, wherein the moulded body is a preform for bottle manufacture.

**5.** Method according to one of the preceding claims, wherein additives are added to the polyester melt of the partial flow (C) before the partial flow (C) is fed into the moulding unit (K).

**6.** Method according to one of the preceding claims, wherein the melt lines are designed for an operating pressure of up to 200 bar and an operating temperature of up to 320° C.

**7.** Method according to one of the preceding claims, wherein additionally a portion, preferably at least 25% but maximum 95% of the dealdehydised polymer melt of the partial flow (D) is fed to a packaging unit via a cooler (L).

**8.** Method according to one of the preceding claims, wherein a minimum of 50% but a maximum of 95% of the polyester material exiting the melt reactor (A) is fed to the partial flow (D).

**9.** Method according to one of the preceding claims, wherein the layers constituted by the partial flow (D) have an acetaldehyde content of less than 8 ppm.

**10.** Method according to one of the preceding claims, wherein the layer of the multi-layer moulded body constituted by the partial flow (C) makes up more than 70 wt. % of the moulded body.

**EP 2 132 014 B1**

**Revendications**

1. Procédé de fabrication de corps moulés présentant au moins deux couches, à partir de polyester à l'état fondu hautement condensé, **caractérisé en ce que** le polyester à l'état fondu sortant d'un réacteur de fusion est subdivisé en deux flux partiels (C) et (D), le polyester à l'état fondu du flux partiel (C) est amené à l'outillage de moulage (K) sans addition de capteurs de piégeage d'acétaldéhyde et sans effectuer une déaldéhydisation ou condensation en phase solide, et le flux partiel (D) est soumis à une déaldéhydisation sans addition de capteurs de piégeage d'aldéhyde, de sorte que l'on réalise une teneur d'acétaldéhyde de moins de 5 ppm avant l'introduction dans le dispositif de moulage (K), et le dispositif de moulage (K) assure le moulage d'une couche de base à partir du flux partiel (C), et l'unité de moulage (K) assure le moulage d'au moins une couche de recouvrement à partir du flux partiel (D).

2. Procédé selon la revendication 1, d'après lequel le corps moulé à couches multiples est au moins à trois couches.

3. Procédé selon l'une des revendications précédentes, d'après lequel le corps moulé est un film d'emballage.

4. Procédé selon l'une des revendications 1 ou 2, d'après lequel le corps moulé est une préforme pour la fabrication de bouteilles.

5. Procédé selon l'une des revendications précédentes, d'après lequel le polyester à l'état fondu du flux partiel (C) est mélangé à des additifs avant l'introduction du flux partiel (C) dans l'unité de moulage (K).

6. Procédé selon l'une des revendications précédentes, d'après lequel les conduites pour le produit à l'état fondu sont dimensionnées pour une pression de fonctionnement allant jusqu'à 200 bar et une température de fonctionnement allant jusqu'à 320 °C.

7. Procédé selon l'une des revendications précédentes, d'après lequel, en supplément, une partie, de préférence au moins 25%, mais au maximum 95% du polyester à l'état fondu déaldéhydisé du flux partiel (D), est amenée, par l'intermédiaire d'un refroidisseur (L), à une unité d'emballage.

8. Procédé selon l'une des revendications précédentes, d'après lequel au moins 50%, mais au maximum 95% du matériau de polyester sortant du réacteur de fusion (A), est amené au flux partiel (D).

9. Procédé selon l'une des revendications précédentes, d'après lequel les couches ayant été constituées par le flux partiel (D) présentent une teneur d'acétaldéhyde de moins de 8 ppm.

10. Procédé selon l'une des revendications précédentes, d'après lequel la couche du corps moulé à couches multiples, ayant été constituée par le flux partiel (C), fait plus de 70% en poids du corps moulé.

**FIGUR 1**

(A)

```
DHI
SCHMELZEREAKTOR
IV = 0.80 dl/g
```

(B)

AA ~35 ppm

(C )
A: Schmelze direkt zur Formgebungseinheit
(Preformmaschine)

B: Schmelze zur Chipproduktion

(E)

B

Chipproduktion

(D)

(F)
```
DAH
Turm
IV 0.80
```

(L)
KÜHL

(H)
C vorgetrocknete Chips
AA < 1 ppm

Verpackungseinheit
AA < 1 ppm

Additive
(I)       (J)

(K)

A

```
Preformmaschine
oder Filmmaschine
```

AA ~45 ppm

Preforms oder Filme
Schicht mit Nahrungsmittelkontakt:
AA < 8 ppm

**FIGUR 2**

mögliche Schichtkonfiguration

Probe 1: 2 Schichten

A: Aussenschicht
B oder C: Schicht mit Kontakt zum Nahrungsmittel

Probe 2: 3 Schichten

B oder C: Schicht mit Kontakt zum Nahrungsmittel
A: Innenschicht
B oder C: Schicht mit Kontakt zum Nahrungsmittel

**EP 2 132 014 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19503053
- EP 0842210 A
- EP 0842211 A
- US 6099778 A
- WO 9841381 A
- EP 0968243 A
- DE 10045719
- US 6274212 B
- DE 19505680
- WO 2005061581 A
- CH 694291 A5
- EP 0320586 A2
- US 3617225 A